# EUROPEAN PATENT APPLICATION

(11) **EP 2 044 875 A1**
(43) Date of publication of application: **08.04.2009**
(21) Application number: 07764013.4
(22) Date of filing: 09.07.2007
(51) Int. Cl.: A47L 9/16, B04C 5/12, B01D 45/12

(54) **THE SECONDARY CYCLONIC DUST SEPARATING CUP OF VACUUM CLEANER**

(30) Priority: 21.07.2006 CN 200610052582; 13.03.2007 CN 200710067453
(71) Applicant: Wang, Yuedan, Yugao, Zhejiang 315400 (CN)
(72) Inventor: LANG, Weiguo, Zhejiang 315400 (CN)
(74) Representative: Schnabel, Jörg
(86) International application number: PCT/CN2007/002105
(87) International publication number: WO 2008/011797

(57) **Abstract**

A secondary cyclone separation dust cup for dust collectors includes a separator. An inner barrel body is coaxially disposed in an outer barrel body of the separator. An air inlet for inner barrel body is formed in an upper portion of the inner barrel body above air inlets for separator, tangent to a peripheral wall of the inner barrel body. A top of the inner barrel body is connected with a connecting support and a lower portion thereof passes through an isolation cover. An air inlet for dust cup is connected with an air outlet for dust cup through the air inlets for separator and the air inlet for inner barrel body. A conical barrel body with a large upper portion and a small lower portion is disposed on an inner wall of the inner barrel body, and an isolation bag is mounted below a bottom of the conical barrel body. A peripheral wall of the isolation bag is connected with an outer wall of the conical barrel body via a connecting band and there is an annular gap between an inner wall of the isolation bag and the outer wall of the conical barrel body. The present invention has a simple structure, low manufacture costs and a remarkable separation effect. Dust all can fall on the bottom of the dust cup after secondary cyclone separation, so the dust can be dumped and cleaned up conveniently. The present invention can also effectively avoid the flow reversal phenomenon of small dust when dust collectors are restarted after work intermission.

## Description

### BACKGROUND OF THE INVENTION

### 1. Field of the Invention

The present invention relates to dust collector manufacturing technologies, and more particularly to a separation device for separating air and dust of centrifugal dust collectors.

### 2. Description of Related Art

At present, dust collectors on the market separate air and dust based on the centrifugal cyclone principle. However, centrifugal dust collectors with single-stage separation devices generally have a bad separation effect, so dust is easily discharged with air, which causes secondary pollution.

Chinese Patent Application No. 200510049880.2, titled "Integral Secondary Separation Dust Cup for Dust Collectors", applied by the applicant, discloses a dust cup, wherein air with dust enters the dust cup in the tangential direction of the dust cup and then deposits in a dust collecting chamber on the bottom of the dust cup after first cyclone separation. Then small dust enters through an air inlet of a separator which consists of blades rotatingly arranged in an annular array to be cyclone-separated once again and deposit in an inner dust chamber connecting an outer pipe of the separator with a bottom of a short pipe. Since the secondary separation dust cup has been improved, there is still some small dust attaching filtering pieces disposed on an air outlet of the dust cup. After repeated use, the small dust depositing on the filtering pieces becomes more and more so that the work efficiency of the dust collector decreases and the effect for collecting dust is affected.

To further improve the effect of separating air and dust, the inventor designed a dust cup for dust collectors having a better separation effect, disclosed in Application No. 200620101407.4, titled "Cyclone Dust Cup for Dust Collectors". Air and dust enters the dust cup in the tangential direction of the dust cup and deposits in a dust collecting chamber on the bottom of the dust cup after first cyclone separation, and then is secondarily cyclone-separated by a plurality of helical pieces and rotating blades in a separator, so that small dust respectively deposits in a dust collecting bottom chamber of an extending pipe and a dust collecting bottom chamber connecting an inner pipe with an outer pipe under an isolation cover.

In the above described two patents, the dust, which is separated twice or three times, deposits in the dust collecting chambers located in different positions inside the dust cups, so it is difficult to clean the dust cups after use and corresponding parts of the collecting chambers in the dust cups must be taken out of the dust cup and cleaned one by one. Also, there are so many parts in the dust cups, which make the manufacture of the dust cup more complex. Furthermore, three separations need three dust collecting chambers which occupy a large space, so the highness of the cup bodies must be increased to achieve an ideal separation effect. Accordingly, the two kinds of dust cups are adapted for vertical dust collectors, and there is a need for cyclone separation dust cup with a remarkable separation effect for short horizontal dust collectors.

Additionally, conventional dust cups generally have a shortcoming that there is a flow reversal phenomenon of small dust when dust collectors are restarted after work intermission so that the small dust is reversely sucked in and attached to filters, as time passes, motor loads are increased and dust collecting effects are affected. To overcome the shortcoming, people always increase the height between bottoms of separators and dust collecting chambers of dust cups to prevent the flow reversal phenomenon of the small dust and enlarge the volume of the dust collecting chambers. However, dust cups for receiving the separators are all high, which increases the volume of the dust collectors and manufacture costs.

### SUMMARY OF THE INVENTION

An object of the present invention is to provide a dust cup for dust collector which has a simple structure, small volume, low manufacture costs and remarkable dust collecting effects. The dust cup can provide a better separation effect for dust cups, especially for horizontal dust collectors, and generally prevent a flow reversal phenomenon of small dust, and the dust cup is convenient for cleaning.

To achieve the above-mentioned object, a secondary cyclone separation dust cup for dust collectors in accordance with the present invention is provided.

The secondary cyclone separation dust cup for dust collectors includes a cup body; an air outlet for dust cup formed in the cup body; an air inlet for dust cup tangent to a peripheral wall of the cup body; a separator disposed in the cup body and having an outer barrel body and an inner barrel body coaxially disposed in the outer barrel body, wherein air inlets for separator are formed in a peripheral wall of the outer barrel body and lower than the air inlet for dust cup, an isolation cover is disposed below the air inlets for separator and connected with a bottom of the outer barrel body, and a top of the outer barrel body is connected with a connecting support which is supported on the cup body; and an air inlet for inner barrel body is formed in an upper portion of the inner barrel body above the air inlets for separator, a top of the inner barrel body is connected with the connecting support and a lower portion of the inner barrel body passes through the isolation cover, and the air inlet for dust cup is connected with the air outlet for dust cup through the air inlets for separator and the air inlet for inner barrel body.

Advantageously, a conical barrel body with a large upper portion and a small lower portion is disposed on an inner wall of the inner barrel body, and there is a certain distance between a bottom of the conical barrel body and a bottom of the inner barrel body to form an inner dust collecting chamber. An isolation bag is mounted below a bottom of the conical barrel body, and one portion of a peripheral wall of the isolation bag is connected with an outer wall of the conical barrel body via a connecting band and there is an annular gap between an inner wall of the isolation bag and the outer wall of the conical barrel body.

Advantageously, the air inlets for separator are rectangular or circular and evenly arranged in a circumference wall of a lower portion of the outer barrel body.

Advantageously, the air inlet for inner barrel body includes two or more than two passages which have axial directions tangent to a peripheral wall of the inner barrel body; or, the air inlet includes a plurality of blades evenly rotatingly arranged in an annular array on the inner barrel body.

Advantageously, the connecting support has a center hole formed in a bottom thereof and is connected with a short pipe under the center hole, and the short pipe has an inside diameter smaller than an inside diameter of the inner barrel body and an upper edge of the conical barrel body is lower than a lower edge of the short pipe.

Advantageously, the connecting support, the outer barrel body and the inner barrel body are integrally formed.

The efficacy of the present invention is as follows: the dust all falls into the inner dust collecting chamber and the outer dust collecting chamber on the bottom of the dust cup after secondary cyclone separation of the present invention, so the dust can be dumped and cleaned up only if the cup cover is opened, which is very convenient; comparing with conventional dust cups, the present invention has a simple structure and low manufacture costs, and tests show that the present invention can provide a remarkable dust separation effect; and the highness of the cup body of the present invention is adapted for horizontal dust collectors; and furthermore, the present invention connects an isolation bag to the lower end of the conical barrel body of the separator to effectively avoid the flow reversal phenomenon of small dust when dust collectors are restarted after work intermission, if there is a lot of dust in the dust collecting chambers, thereby improving dust collecting effects and service lives of the dust collectors.

### BRIEF DESCRIPTION OF THE DRAWINGS

Fig. 1 is a structural schematic view of the present invention, wherein arrows indicate airflow directions;
Fig. 2 is a cross-sectional view taken along a line A-A in Fig. 1;
Fig. 3 is a perspective view of an inner barrel body in Fig. 1; and
Fig. 4 is a perspective view of a separator connected with a connecting support in Fig. 1.

### DETAILED DESCRIPTION OF THE PREFERRED EMBODIMENTS

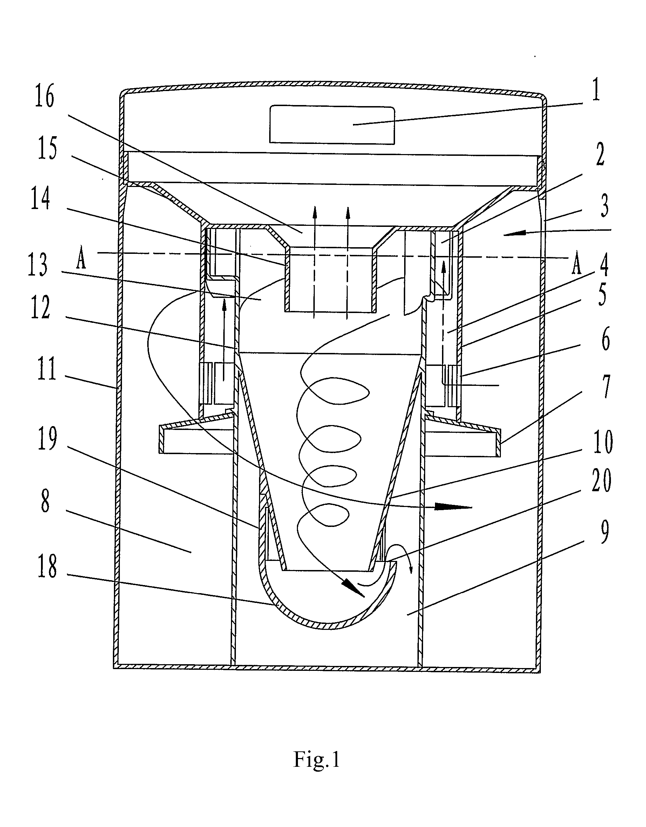

As shown in Fig. 1, a secondary cyclone separation dust cup for dust collectors includes a cup body 11, an air inlet for dust cup 3 which is formed in a peripheral wall of the cup body 11 and tangent to the peripheral wall, an air outlet for dust cup 1 which is formed in a dust cup cover engaging with the cup body 11, and a separator disposed in the dust cup.

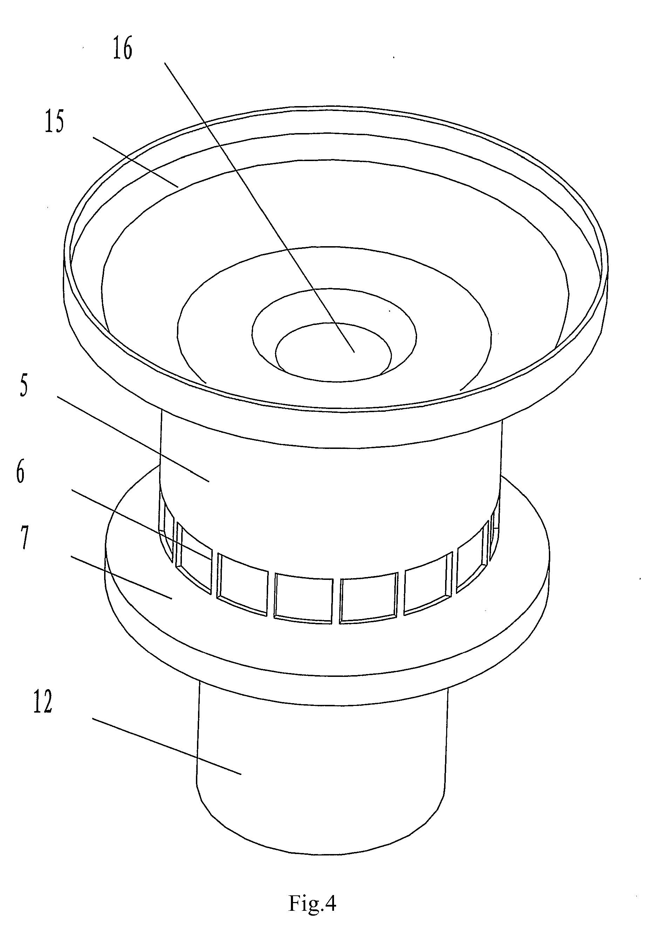

As shown in Fig. 1 and Fig. 4, the separator has an outer barrel body 5 and an inner barrel body 12 coaxially mounted in the center of the outer barrel body 5. An upper portion of the outer barrel body 5 is connected with a connecting support 15. Air inlets for separator 6, which are lower than the air inlet for dust cup 3, are formed in a peripheral wall of a lower end of the outer barrel body 5 at intervals. The air inlets for separator 6 may be rectangular or circular and may be symmetrically arranged in an annular shape. The connecting support 15 has a circular-plate-shaped bottom with a large upper opening and a small lower opening, and a center hole 16 is formed in the bottom of the connecting support 15. The connecting support 15 is connected with a short pipe 14 under the center hole 16.

A trumpet-shaped isolation cover 7 is disposed below the air inlets for separator 6 and connected with a bottom of the outer barrel body 5.

A top of the inner barrel body 12 is connected with the connecting support 15 and a bottom of the inner barrel body 12 extends to the bottom of the dust cup through the isolation cover 7. The connecting support 15 connects the tops of the inner barrel body 12 and the outer barrel body 5 and then is supported on the cup body 11. In the present embodiment, the connecting support 15 is placed on a cup mouth of the cup body 11 of the dust cup.

As shown in Fig. 1, a conical barrel body 10 with a comparatively larger upper opening and a smaller lower opening is disposed on an inner wall of the inner barrel body 12. An upper edge of the conical barrel body 10 is lower than a lower edge of the short pipe 14. There is a certain distance between a bottom of the conical barrel body 10 and the bottom of the inner barrel body 12 to form an inner dust collecting chamber 9 on the bottom of the inner barrel body 12.

An isolation bag 18 is mounted below the bottom of the conical barrel body 10. One portion of a peripheral wall of the isolation bag 18 is connected with an outer wall of the conical barrel body 10 via a connecting band 19. There is an annular gap 20 between an inner wall of the isolation bag 18 and the outer wall of the conical barrel body 10, that is, the semidiameter of the upper edge of the isolation bag 18 is greater than that of the lower edge of the conical barrel body 10, thereby forming the annular gap 20.

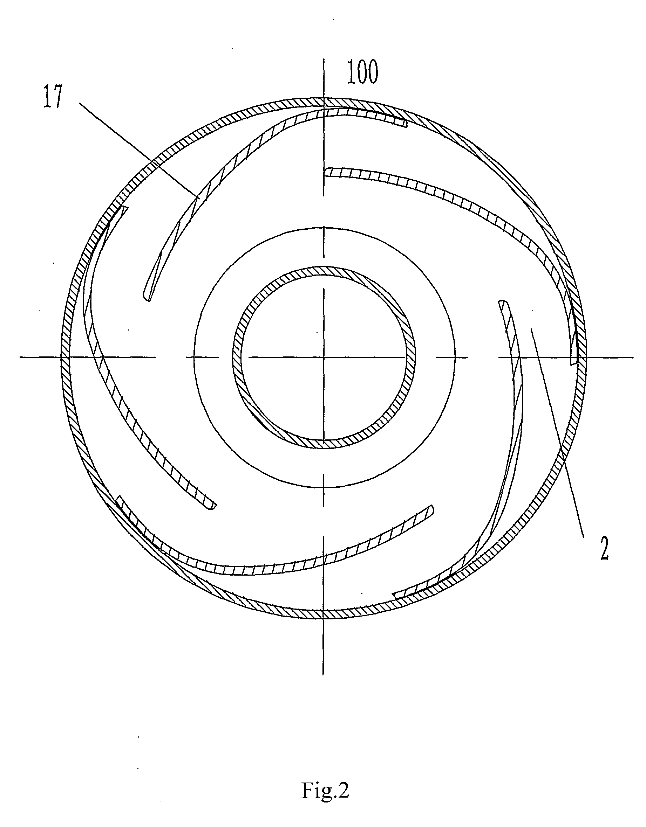

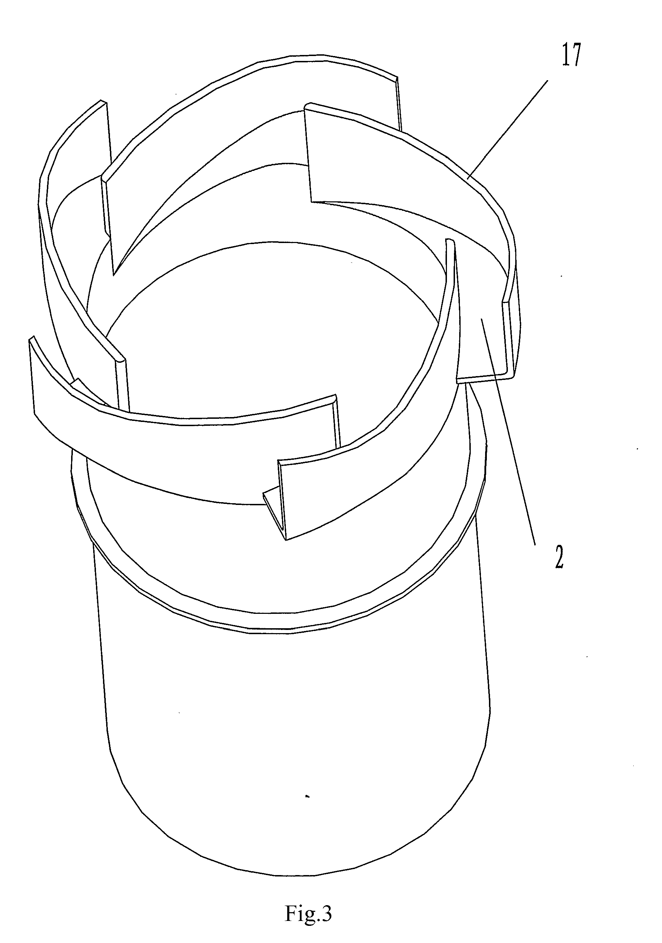

An air inlet 2 is formed in an upper end of the inner barrel body 12 and tangent to a peripheral wall of the inner barrel body 12. The air inlet 2 may include two or more than two passages whose axial directions are tangent to the peripheral wall of the inner barrel body 12. Alternatively, the air inlet 2 may include a plurality of blades 17 arranged in an annular array, as shown in Fig. 2 and Fig. 3.

The air inlet 2 formed in the upper end of the inner barrel body 12 is connected with the lower air inlets for separator 6 through an annular space 4 formed between the inner barrel body 12 and the outer barrel body 5, thereby forming an airflow passage.

Please refer to the figures, the work principle of the present invention will be described in detail. As shown in Fig. 1, an air passage, which is connected with an air inlet for an electric blower fan, is connected with the air outlet for dust cup 1. Turning on a switch, the electric blower fan works, and then negative pressure occurs in the dust cup. So air with dust enters the inner chamber of the dust cup through the air inlet for dust cup 3.

Since the axis of the air inlet for dust cup 3 is tangent to the circumference surface of the cup body 11 of the dust cup, rotating airflow occurs. Also, because the air inlets for separator 6 are lower than the air inlet for dust cup 3, the air with dust causes a downwardly helical rapid cyclone after entering the dust cup.

The dust is thrown toward the peripheral wall of the cup body 11 and falls into an outer dust collecting chamber 8 on the bottom of the dust cup under the influence of the centrifugal force and the gravity. Based on the isolation function of the isolation cover 7, the dust falling into the outer dust collecting chamber 8 is difficult to be re-picked up under the action of the helical airflow above, so most of the dust is separated.

Only a litter air with small dust passes through the air inlets for separator 6 formed in the peripheral wall of the outer barrel body 5 and enters the separator. Since the air pressure increases and the airflow is accelerated, the portion of air passes through the annular space 4 between the inner and the outer barrel bodies 12, 5 and enters the separator through the air inlet 2 for the separator in the upper end of the inner barrel body 12.

Under the effect of the guiding function of the air inlet 2 for the separator tangent to the peripheral wall of the inner barrel body 12, the air entering the inner barrel body 12 also causes a rotating airflow. Because the upper chamber 13 of the inner barrel body 12 has a greater inside diameter, the airflow is directed downwards into the conical barrel body 10. Since the conical barrel body 10 has the upper chamber with a great inside diameter and the lower end with a small inside diameter, according to the hydrodynamics principle, the air pressure of the airflow increases and the airflow is accelerated, and the centrifugal force makes the small dust separate from the air again and the small dust is thrown toward the inner wall of the conical barrel body 10 and falls on the inner wall of the isolation bag 18. The small dust, which is falling rotatingly for inertia, is impacted by the airflow and falls into the inner dust collecting chamber 9 on the bottom of the inner barrel body 12 through the annular gap 20 between the outer wall of the conical barrel body 10 and the inner wall of the isolation bag 18 along the inner wall of the isolation bag 18. After secondary separation, the air is guided by the short pipe 14 of the center hole 16 of the connecting support 15 to enter the electric blower fan through the air outlet for dust cup 1, thereby being discharged from the dust collector.

Respectively assemble the separators of the secondary cyclone separation dust cup for dust collectors of the present invention and a cyclone dust cup for dust collectors disclosed in Patent Application No. 200610049699.6 in dust cups of the same horizontal dust collectors. Comparing the air volume decrease percentages when the dust collectors suck 50g talcum powder for more than five minutes each time, the present invention can provide a remarkably improved air and dust separation effect, as shown in the following table:

| Order | Application No.: 200610049699.6 | The present invention (no isolation bag) | The present invention (with an isolation bag) |
|---|---|---|---|
| 1 | 78.9% | 91.6% | 96.5% |
| 2 | 70.6% | 83.2% | 92.6% |
| 3 | 65.2% | 75.8% | 88.3% |
| 4 | 61.0% | 70.9% | 83.7% |
| 5 | 56.4% | 66.5% | 79.2% |
| 6 | | 62.0% | 74.0% |
| 7 | | 59.4% | 68.1% |

## Claims

1. A secondary cyclone separation dust cup for dust collectors, comprising:
a cup body;
an air outlet for dust cup formed in the cup body;
an air inlet for dust cup tangent to a peripheral wall of the cup body; and
a separator, disposed in the cup body and having an outer barrel body and an inner barrel body coaxially disposed in the outer barrel body, wherein air inlets for separator are formed in a peripheral wall of the outer barrel body and lower than the air inlet for dust cup, an isolation cover is disposed below the air inlets for separator and connected with a bottom of the outer barrel body, and a top of the outer barrel body is connected with a connecting support which is supported on the cup body; and an air inlet for inner barrel body is formed in an upper portion of the inner barrel body above the air inlets for separator, a top of the inner barrel body is connected with the connecting support and a lower portion of the inner barrel body passes through the isolation cover, and the air inlet for dust cup is connected with the air outlet for dust cup through the air inlets for separator and the air inlet for inner barrel body.

2. The secondary cyclone separation dust cup for dust collectors as claimed in claim 1, wherein a conical barrel body with a large upper portion and a small lower portion is disposed on an inner wall of the inner barrel body, and there is a certain distance between a bottom of the conical barrel body and a bottom of the inner barrel body to form an inner dust collecting chamber.

3. The secondary cyclone separation dust cup for dust collectors as claimed in claim 2, wherein an isolation bag is mounted below a bottom of the conical barrel body, and one portion of a peripheral wall of the isolation bag is connected with an outer wall of the conical barrel body via a connecting band and there is an annular gap between an inner wall of the isolation bag and the outer wall of the conical barrel body.

4. The secondary cyclone separation dust cup for dust collectors as claimed in claim 1, 2 or 3, wherein the air inlets for separator are rectangular or circular and symmetrically arranged in a circumference wall of a lower portion of the outer barrel body.

5. The secondary cyclone separation dust cup for dust collectors as claimed in claim 1, 2 or 3, wherein the air inlet for inner barrel body includes two or more than two passages whose axial directions are tangent to a peripheral wall of the inner barrel body; or, the air inlet includes a plurality of blades symmetrically rotatingly arranged in an annular array on the inner barrel body.

6. The secondary cyclone separation dust cup for dust collectors as claimed in claim 4, wherein the connecting support has a center hole formed in a bottom thereof and is connected with a short pipe under the center hole, and the short pipe has an inside diameter smaller than an inside diameter of the inner barrel body and an upper edge of the conical barrel body is lower than a lower edge of the short pipe.

7. The secondary cyclone separation dust cup for dust collectors as claimed in claim 5, wherein the connecting support has a center hole formed in a bottom thereof and is connected with a short pipe under the center hole, and the short pipe has an inside diameter smaller than an inside diameter of the inner barrel body and an upper edge of the conical barrel body is lower than a lower edge of the short pipe.

8. The secondary cyclone separation dust cup for dust collectors as claimed in claim 6, wherein the connecting support, the outer barrel body and the inner barrel body are integrally formed.

9. The secondary cyclone separation dust cup for dust collectors as claimed in claim 7, wherein the connecting support, the outer barrel body and the inner barrel body are integrally formed.
